# EUROPÄISCHE PATENTSCHRIFT

(11) **EP 1 138 370 B1**
(45) Veröffentlichungstag und Bekanntmachung des Hinweises auf die Patenterteilung: **10.08.2005**
(21) Anmeldenummer: 01105095.2
(22) Anmeldetag: 02.03.2001
(51) Int. Cl.: B01D 61/14, B01D 61/18, B01D 61/20, C25D 13/24

(54) **Filtervorrichtung für die Mikro- und/oder Ultrafiltration**
Filtering device for microfiltration and/or ultrafiltration
Dispositif de filtration pour la micro- et/ou l'ultrafiltration

(30) Priorität: 31.03.2000 DE 10016006; 11.05.2000 DE 10022917
(43) Veröffentlichungstag der Anmeldung: 04.10.2001
(73) Patentinhaber: Atech Innovations GmbH, 45966 Gladbeck (DE)
(72) Erfinder: Bolduan, Herr Peter, 49549 Ladbergen (DE)
(74) Vertreter: Gesthuysen, von Rohr & Eggert

(56) Entgegenhaltungen:
- EP-A- 1 067 219
- DE-U- 29 905 464
- US-A- 4 153 545
- US-A- 4 326 960
- US-A- 4 849 104
- PATENT ABSTRACTS OF JAPAN Bd. 013, Nr. 293 (C-615), 6. Juli 1989 (1989-07-06) -& JP 01 090004 A (HITACHI LTD), 5. April 1989 (1989-04-05) -& DATABASE WPI Derwent Publications Ltd., London, GB; AN 1989-147299 XP002256011 -& JP 01 090004 A
- PATENT ABSTRACTS OF JAPAN Bd. 013, Nr. 137 (C-582), 5. April 1989 (1989-04-05) -& JP 63 302906 A (ASAHI CHEM IND CO LTD), 9. Dezember 1988 (1988-12-09) -& DATABASE WPI Derwent Publications Ltd., London, GB; AN 1989-028615 XP002256012 -& JP 63 302906 A
- PATENT ABSTRACTS OF JAPAN Bd. 009, Nr. 028 (C-264), 6. Februar 1985 (1985-02-06) -& JP 59 173106 A (NITTO DENKI KOGYO KK), 1. Oktober 1984 (1984-10-01) -& DATABASE WPI Derwent Publications Ltd., London, GB; AN 1984-279702 XP002256013 -& JP 59 173106 A
- PATENT ABSTRACTS OF JAPAN Bd. 009, Nr. 066 (C-271), 26. März 1985 (1985-03-26) -& JP 59 199003 A (ASAHI KASEI KOGYO KK), 12. November 1984 (1984-11-12) -& DATABASE WPI Derwent Publications Ltd., London, GB; AN 1984-316071 XP002256014 -& JP 59 199003 A

## Beschreibung

Die Erfindung betrifft eine Filtervorrichtung für die Mikro- und/oder Ultrafiltration, vorzugsweise für Lacke, wie kathodische Tauchlacke, zum Anschluß an eine Leitung, mit einem Druckgehäuse und wenigstens einem in dem Druckgehäuse angeordneten Keramik-Membranfilterelement, wobei das Keramik-Membranfilterelement ein als Multikanal gefertigtes Trägerrohr aufweist. Des weiteren betrifft die vorliegende Erfindung ein Verfahren zur Mikro- und/oder Ultrafiltration von zu filtrierenden Flüssigkeiten unter Verwendung der vorgenannten Filtervorrichtung.

Filtervorrichtungen für die Mikro- und Ultrafiltration der eingangs genannten Art werden in der Praxis in vielen Bereichen eingesetzt. Anwendungsbereiche sind beispielsweise die Filtration von Abwasser, von Reinigungslösungen, von Kühlschmierstoffen sowie von Bohremulsionen, von Zellabtrennungen nach Hochlastbiologien, die Konzentrierung von Ziegelengoben, die Reinigung von Beizbädern sowie das Recycling von Schwimmbadwasser. Auch in der chemischen und biochemischen Industrie werden Filtervorrichtungen der eingangs genannten Art zur Zellabtrennung, Proteinfiltration, Farbstoff-Filtration, Katalysator-Rückgewinnung und Reinigung fotochemischer Entwicklerlösungen verwendet. Des weiteren finden derartige Filtervorrichtungen auch in der Lebensmittelindustrie Anwendung, beispielsweise bei der Filtration von Geläge-Bier, bei der Klarfiltration von Zuckersirup, Fruchtsaft, Wein und Essig, bei der Molke-Entfettung und in der Lacktoferrin-Filtration.

Im Bereich des Recycelns von Lacken, insbesondere von kathodischen Tauchlacken (KTL-Lacken), die beim Lackieren von Kraftfahrzeugteilen verwendet werden, werden üblicherweise keine Keramik-Membranfilterelemente verwendet. Dies liegt daran, daß erkannt worden ist, daß sich die Keramik-Membranfilterelemente vergleichsweise schnell zusetzen, so daß ein wirtschaftliches Recycling des Lackes mit Filtervorrichtungen der in Rede stehenden Art derzeit nicht möglich ist. Aus diesem Grunde werden zum Recyceln von KTL-Lacken derzeit üblicherweise Filtervorrichtungen mit Polymerfiltern verwendet.

Problematisch ist allerdings, daß Polymerfilter für den Einsatzfall beim Recyceln von KTL-Lacken eine vergleichsweise geringe Durchsatzleistung haben. Aufgrund der vergleichsweise geringen Durchsatzleistung sind, um große Mengen an zu filtrierender bzw. zu recycelnder Flüssigkeit durchsetzen zu können, sehr große Filterflächen erforderlich, was einen relativ hohen Platzbedarf für eine Polymer-Filteranlage nach sich zieht. Ein weiterer Nachteil von Polymer-Filtervorrichtungen besteht jedenfalls für den Einsatzfall beim Recyceln von KTL-Lacken darin, daß die Polymer-Filterelemente eine vergleichsweise kurze Lebensdauer zwischen einem halben bis einem Jahr haben. Anschließend müssen die Polymer-Filterelemente ausgetauscht werden, was mit einem entsprechenden Arbeitsaufwand verbunden ist. Darüber hinaus ist es bei Polymer-Filterelementen für den erwähnten Einsatzfall so, daß nach einem betriebsbedingten Stillstand der Filteranlage die Polymerfilter gespült werden müssen, um bei einem Neustart der Anlage die gewünschte Filtrationsleistung zu erreichen. Derartige Spülungen sind mit einem erhöhten Arbeits- und Zeitaufwand verbunden, was sich im Ergebnis kostenmäßig nachteilig auswirkt. Wird nicht hinreichend gespült oder wird die Spülung unbeabsichtigt vergessen, kann die Funktion der gesamten Anlage erheblich beeinträchtigt werden.

Eine Filtervorrichtung der eingangs genannten Art ist bereits aus der DE 299 05 464 U1 bekannt. Die bekannte Filtervorrichtung weist mehrere Druckgehäuse auf, in denen jeweils ein keramisches Membranfilterelement angeordnet ist. Die bekannte Filtervorrichtung ist allerdings nicht zum Recycling von KTL-Lacken geeignet, da Lackpartikel die keramischen Membranfilterelemente innerhalb kürzester Zeit zusetzen.

Eine weitere Filtervorrichtung der eingangs genannten Art geht aus der EP 1 067 219 A1 hervor, bei der es sich um einen nachveröffentlichten Stand der Technik gemäß Artikel 54 (3) EPÜ handelt. Die bekannte Vorrichtung ist zur Mikrofiltration von beim kathodischen Tauchlackieren anfallender Flüssigkeit vorgesehen und weist geerdete Keramik-Membranfilterelemente mit einer Durchgangsöffnung auf.

Die JP 01 090004 A betrifft eine Filtervorrichtung mit einem Hohlfasermembran-Modul. Zum Ableiten elektrischer Ladungen sind innerhalb der einzelnen Hohlfasern elektrisch leitende, spiralförmige Drähte angeordnet, die mit der Oberfläche der Membranen in Kontakt stehen und außerhalb der Filtervorrichtung geerdet sind. Nachteilig bei der vorgenannten Filtervorrichtung ist der hohe konstruktive Aufwand, der zu hohen Herstellungskosten der Filtervorrichtung führt.

Des weiteren ist aus der JP 63 302906 A eine Filtervorrichtung mit einem Hohlfaser-Modul bekannt. Zur Erdung der Hohlfasern, bei denen es sich um Polymer-Membranfilterelemente handelt, ist innerhalb wenigstens einer Hohlfaser ein elektrisch leitfähiger Draht vorgesehen, der außerhalb der Filtervorrichtung geerdet ist. Die bekannte Vorrichtung dient der Behandlung hochreinen Kondensats. Beim Recycling von KTL-Lacken können mit der bekannten Filtervorrichtung nur geringe Durchsatzleistungen erzielt werden.

Aufgabe der vorliegenden Erfindung ist es daher, eine Filtervorrichtung der eingangs genannten Art zur Verfügung zu stellen, bei der die Gefahr des Zusetzens der Filtervorrichtung beim Recyceln von Lacken, insbesondere KTL-Lacken, verringert ist und die sich durch eine hohe Durchsatzleistung und eine lange Lebensdauer auszeichnet.

Die zuvor hergeleitete Aufgabe ist bei einer Filtervorrichtung der eingangs genannten Art erfindungsgemäß im wesentlichen dadurch gelöst, daß das Keramik-Membranfilterelement mit wenigstens einem elektrischen Leiter elektrisch verbunden und über den elektrischen Leiter geerdet ist, daß das Druckgehäuse und/oder die Leitung aus einem elektrisch leitfähigen Material besteht, daß das Keramik-Membranfilterelement über den elektrischen Leiter mit dem Druckgehäuse und/oder der Leitung elektrisch verbunden ist und daß das Druckgehäuse und/oder die Leitung geerdet ist.

Verfahrensmäßig ist vorgesehen, daß die zu filtrierenden Flüssigkeit unter Verwendung der vorgenannten Filtervorrichtung filtriert wird.

Überraschenderweise ist festgestellt worden, daß es bei Anwendung der Erfindung ohne weiteres wirtschaftlich möglich ist, KTL-Lacke mit Keramik-Membranfilterelementen zu recyceln. Auch andere Flüssigkeiten, die bei der Filtration einen Ladungszustand aufweisen, lassen sich nunmehr filtrieren bzw. recyceln. Das erfindungsgemäße Ergebnis war deshalb überraschend, da man bisher der Auffassung war, daß Filtervorrichtungen in der Praxis ohnehin stets geerdet waren. Bei genauen Untersuchungen ist jedoch festgestellt worden, daß aufgrund von verwendeten, nicht leitenden Dichtungen und Puffern die Druckgehäuse der einzelnen Filtervorrichtungen an sich keine hinreichende Erdung aufwiesen. Selbst bei hinreichender Erdung allein des Druckgehäuses an sich konnte der erfindungsgemäße Effekt nicht in dem Maße festgestellt werden, wie dies bei einer Erdung der einzelnen Keramik-Membranfilterelemente auftritt. Es wird davon ausgegangen, daß der erfindungsgemäße Effekt, nämlich die Ableitung von Ladungen über die Erdung, direkt an der Stelle stattfinden muß, an der auch die Filtration stattfindet, nämlich am Keramik-Membranfilterelement selbst. Des weiteren wird davon ausgegangen, daß es durch die erfindungsgemäße Ausgestaltung auch zur Ableitung von ggf. an der Membranoberfläche vorgesehenen Ladungen am Keramik-Membranfilterelement selbst kommt. In jedem Falle führt die Ableitung von Ladungen durch die Erdung des Keramik-Membranfilterelements dazu, daß sich die einzelnen Moleküle bzw. Ionen der zu filtrierenden Flüssigkeit nicht an der Oberfläche des Keramik-Membranfilterelements anlagern und das Filterelement auf diese Weise zusetzen.

Die mit der Erfindung erzielbaren Vorteile sind in jedem Falle überzeugend. Durch die deutlich höhere Durchsatzleistung können nun dort, wo bisher lediglich Polymerfilter eingesetzt werden konnten, auch Filtervorrichtung mit Keramik-Membranfilterelementen verwendet werden, die bei gleicher Durchsatzleistung einen erheblich geringeren Platzbedarf haben. Des weiteren ist festgestellt worden, daß es durch die Erfindung ohne weiteres möglich ist, die Spülintervalle der erfindungsgemäßen Filtervorrichtung zu verlängern bzw. über einen langen Zeitraum überhaupt keine Spülung durchzuführen, ohne daß sich dies nachteilig auf den Wirkungsgrad der Anlage auswirkt. Außerdem ist es bei Verwendung von keramischen Membranfilterelementen der erfindungsgemäßen Art so, daß nach einem Stillstand der Anlage diese sofort wieder angefahren werden kann, also keine Spülung bzw. Reinigung vorgenommen werden muß, was auch zur Verbesserung der Betriebs- bzw. Funktionssicherheit der Anlage beiträgt.

Bei der konstruktiv einfachen erfindungsgemäßen Ausgestaltung besteht das Druckgehäuse und/oder die Leitung, die an die Filtervorrichtung angeschlossen wird, aus einem elektrisch leitfähigen Material, während das Keramik-Membranfilterelement über den elektrischen Leiter mit dem Druckgehäuse bzw. der Leitung verbunden ist. Die Erdung erfolgt dann über das Druckgehäuse bzw. die Leitung.

Bei einer besonders einfachen Ausgestaltung der vorliegenden Erfindung ist der Leiter als vom Druckgehäuse separates Bauteil, vorzugsweise als Draht ausgebildet, der das Druckgehäuse und/oder die Leitung mit dem Keramik-Membranfilterelement elektrisch verbindet. Die Verwendung eines Drahtes stellt eine sehr einfache und kostengünstige Ausgestaltung eines Leiters dar, die auch bei bestehenden Anlagen nachträglich ohne weiteres mit geringen Kosten realisiert werden kann.

Besonders gute Filtrationsergebnisse werden in diesem Zusammenhang dadurch erzielt, daß der Leiter in eine Durchgangsbohrung des Keramik-Membranfilterelements eingesetzt ist und sich dabei zumindest im wesentlichen über die gesamte Länge der Durchgangsbohrung erstreckt. Auf diese Weise ist über die gesamte Länge des Keramik-Membranfilterelements eine Ableitung von Ladungen möglich. Besonders günstig ist es dabei, wenn der Leiter vollständig durch die Durchgangsbohrung hindurchgeführt und an seinen beiden Enden geerdet ist, also beidseitig mit dem Druckgehäuse und/oder der Leitung elektrisch verbunden ist.

Üblicherweise weisen Druckgehäuse der in Rede stehenden Art ein mittiges Druckgehäuseteil und endseitig jeweils ein Anschlußstück zum Anschluß an die Leitung auf. Zur Befestigung des Leiters am Druckgehäuse bietet es sich dabei an, daß der Leiter zwischen dem jeweiligen Anschlußstück und dem Druckgehäuseteil gehalten, insbesondere dazwischen eingeklemmt ist. Natürlich ist es auch möglich, den Leiter zwischen dem Druckgehäuse und der Leitung an der betreffenden Anschlußstelle zu halten.

Keramik-Membranfilterelemente der in Rede stehenden Art weisen eine Mehrzahl von Durchgangsöffnungen auf. In diesem Zusammenhang, ist festgestellt worden, daß es zur ausreichenden Ableitung von Ladungen ausreichend ist, daß lediglich ein Leiter für das Keramik-Membranfilterelement vorgesehen ist. Günstigerweise sollte dieser Leiter dann in einer mittigen, insbesondere in der zentralen Durchgangsöffnung angeordnet sein, sofern eine solche vorgesehen ist.

Um einerseits eine sichere Befestigung des Leiters am Keramik-Membranfilterelement zu erzielen und um andererseits eine gute Ableitung der Ladungen zu gewährleisten, ist der Leiter über einen elektrisch leitfähigen Klebstoff mit dem Keramik-Membranfilterelement in der Durchgangsöffnung verklebt. In diesem Zusammenhang hat es sich als besonders günstig erwiesen, daß der elektrisch leitfähige Klebstoff sich im wesentlichen über die gesamte Stirnfläche des Keramik-Membranfilterelements erstreckt. Hierdurch ist gewährleistet, daß die der Filtervorrichtung zuströmende Flüssigkeit schon beim Auftreffen auf die Stirnfläche des Keramik-Membranfilterelement die Möglichkeit der Ableitung von Ladungen hat. Des weiteren wirkt sich die Anordnung der Klebstoffschicht auch positiv auf die Ableitung von Ladungen der Oberfläche des Keramik-Membranfilterelements aus.

Zweckmäßig ist es in diesem Zusammenhang im übrigen, daß sich der elektrisch leitfähige Klebstoff über eine geringe Strecke (vorzugsweise von wenigen Zentimetern) bis in sämtliche Durchgangsöffnungen erstreckt, also nicht nur in die Durchgangsöffnung, in der sich der Leiter befindet, sondern auch in alle anderen, also keinen Leiter aufweisenden Durchgangsöffnungen. Herstellungstechnisch ist dies in einfacher Weise erreichbar, nämlich durch endseitiges Eintauchen des Keramik-Membranfilterelements in den elektrisch leitfähigen Klebstoff.

Filtervorrichtungen der in Rede stehenden Art können grundsätzlich ein oder aber eine Mehrzahl von Keramik-Membranfilterelementen aufweisen. Sind eine Mehrzahl von Keramik-Membranfilterelementen vorgesehen, ist es ausreichend, daß jedes Keramik-Membranfilterelement nur einen Leiter aufweist. Im eingebauten Zustand werden die einzelnen aus den Keramik-Membranfilterelementen herausragenden Leiter dann günstigerweise zu einem Strang zusammengefaßt und - wie zuvor beschrieben - geerdet oder aber es wird ein weiterer, alle Leiter miteinander verbindender Leiter verwendet, der entsprechend geerdet wird.

Nachfolgend werden Ausführungsbeispiele der Erfindung anhand der Zeichnung erläutert. Es zeigt:
- Fig. 1: eine Querschnittsansicht einer erfindungsgemäßen Filtervorrichtung,
- Fig. 2: eine schematische Ansicht von in erfindungsgemäßer Weise geerdeten Keramik-Membranfilterelementen und
- Fig. 3a-3f: verschiedene Keramik-Membranfilterelemente, die geerdet werden können.

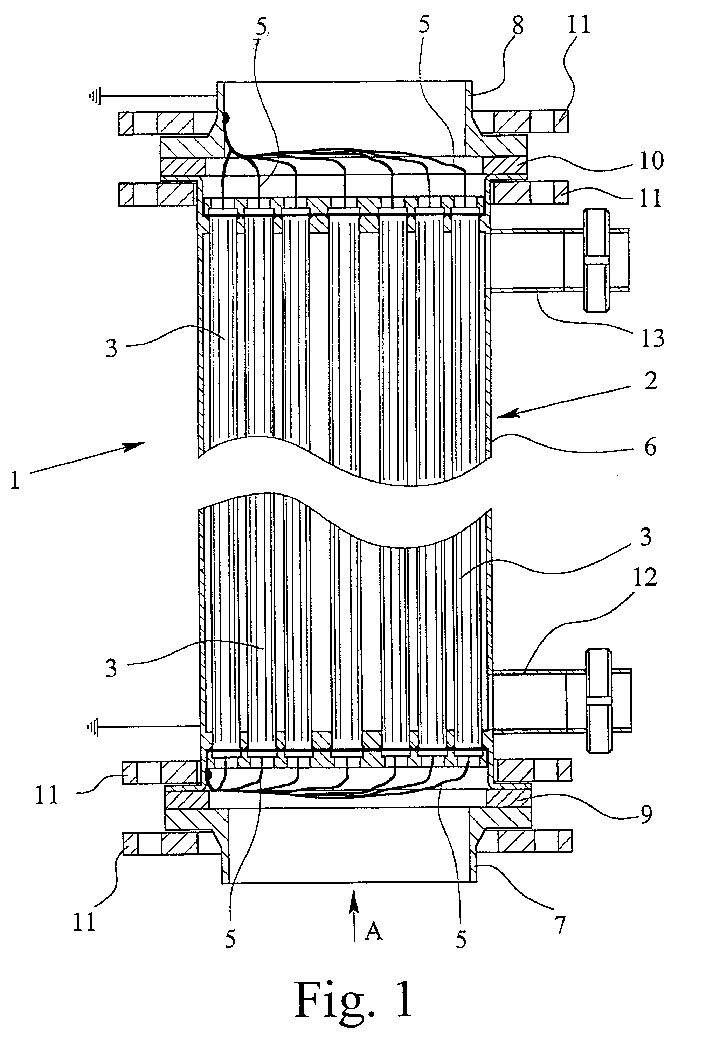

In Fig. 1 ist eine Filtervorrichtung 1 dargestellt, die vor allem für die Mikro- und/oder Ultrafiltration von Flüssigkeiten eingesetzt werden kann. Insbesondere eignet sich die Filtervorrichtung 1 zur Filtration von Lacken und insbesondere kathodischen Tauchlacken. Nicht dargestellt, daß die Filtervorrichtung 1 zum Betrieb endseitig, d. h. an ihren beiden Enden, an eine die zu filtrierende Flüssigkeit führende Leitung angeschlossen wird. Die Filtervorrichtung 1 weist ein Druckgehäuse 2 und wenigstens ein in dem Druckgehäuse 2 angeordnetes Keramik-Membranfilterelement 3 auf.

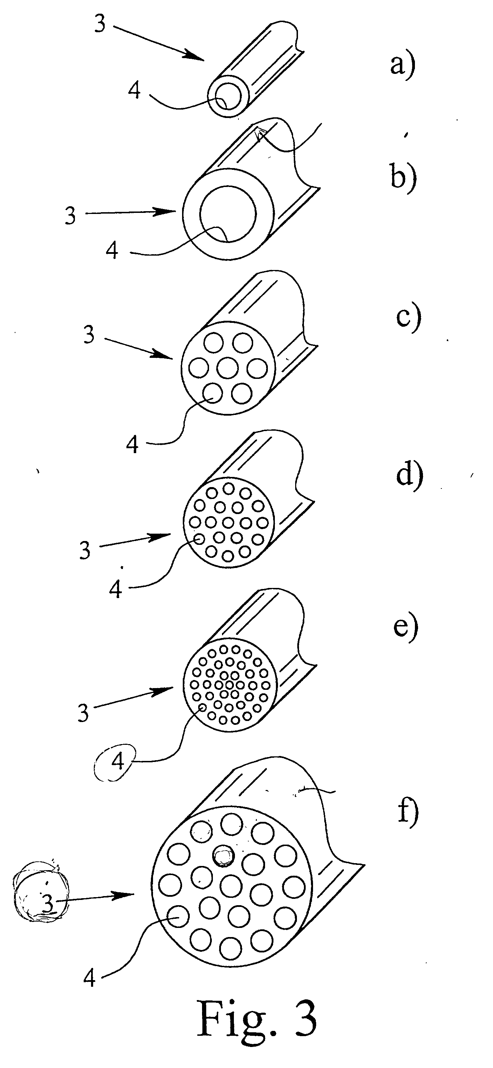

Im dargestellten Ausführungsbeispiel sind im Druckgehäuse 2 eine Vielzahl von Keramik-Membranfilterelementen 3 vorgesehen. Die einzelnen Keramik-Membranfilterelemente 3 haben jeweils eine langgestreckte, stabartige Ausbildung und sind erfindungsgemäß jeweils mit einer Mehrzahl von Durchgangsöffnungen 4 versehen. Während bei den Ausführungsformen gemäß den Fig. 3a und 3b nur eine Durchgangsöffnung 4 vorgesehen ist, sind bei den erfindungsgemäßen Ausführungsformen gemäß den Fig. 3c bis 3f jeweils mehrere Durchgangsöffnungen 4 vorgesehen.

Jedes der Keramik-Membranfilterelemente 3 weist ein Trägerrohr auf, das aus offenporösem α-Aluminiumoxid oder Siliciumkarbid besteht. Die einzelnen Trägerrohre weisen eine maximale Durchlässigkeit auf und erfüllen hohe Ansprüche an mechanische Festigkeiten. Auf der Kanalinnenseite der, wie dies in den Fig. 3c bis 3f dargestellt ist, als Multikanal gefertigten Trägerrohre ist eine nur wenige µm starke Membranschicht mit definierter Textur in mehreren Lagen aufgebracht und monolytisch verbunden. Das Material der Membranschicht ist je nach Anwendungsfall α-Aluminiumoxid, SiC, ZrO₂ oder TiO₂. Der mittlere Porendurchmesser der Membranschicht liegt bei der Mikrofiltration in der Regel im Bereich ≥ 0,1 µm und in der Ultrafiltration üblicherweise ≤ 0,05 µm. Keramik-Membranfilterelemente 3 der vorgenannten Art zeichnen sich grundsätzlich durch hohe Druckfestigkeit, Beständigkeit gegen konzentrierte Laugen und Säuren, Rückspülbarkeit, Abrasionsbeständigkeit, problemloses Reinigen, Temperaturbeständigkeit, Dampfsterilisierbarkeit und einen hohen Flux aus.

Wesentlich ist nun, daß wenigstens ein Keramik-Membranfilterelement 3 mit wenigstens einem elektrischen Leiter 5 elektrisch verbunden und über den elektrischen Leiter 5 geerdet ist. Im dargestellten Ausführungsbeispiel besteht das Druckgehäuse 2 aus einem elektrisch leitfähigen Material, wobei das Keramik-Membranfilterelement 3 über den elektrischen Leiter 5 mit dem Druckgehäuse 2 elektrisch verbunden und das Druckgehäuse 2 geerdet ist. Auch ist es möglich, den elektrischen Leiter 5 mit der nicht dargestellten Leitung, sofern diese ebenfalls aus einem elektrisch leitfähigen Material besteht, zu verbinden und die Leitung zu erden.

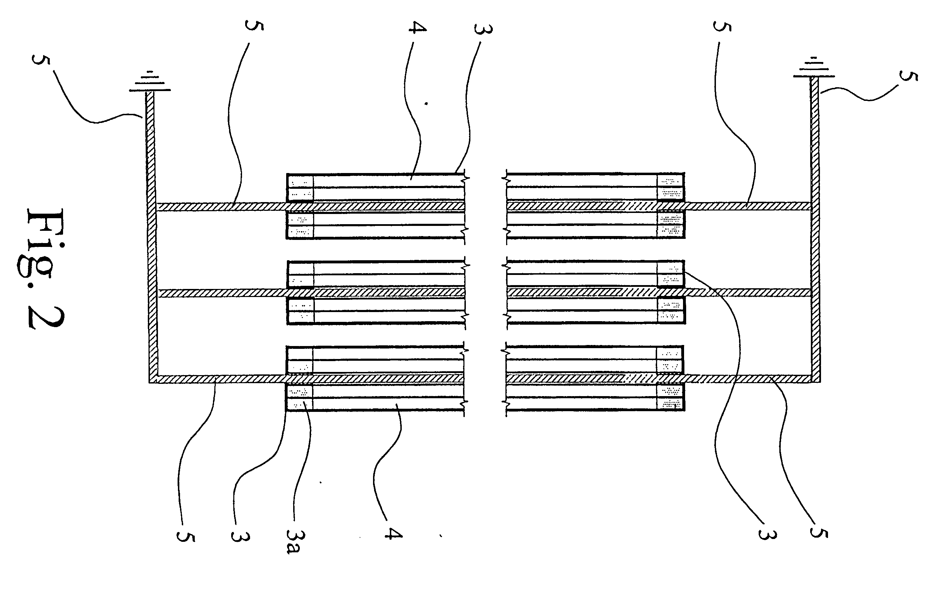

Vorliegend wird als Leiter 5 ein vom Druckgehäuse 2 separates Bauteil, nämlich ein Draht, verwendet, der das Druckgehäuse mit dem Keramik-Membranfilterelement 3 elektrisch verbindet. Wie sich dabei aus Fig. 2 ergibt, ist der Leiter 5 durch eine der Durchgangsöffnungen 4 des Keramik-Membranfilterelementes 3 vollständig hindurchgeführt, wobei die Enden des Leiters 5 endseitig aus dem Keramik-Membranfilterelement 3 herausragen. An seinen beiden Enden ist der Draht 5 dann mittelbar oder unmittelbar geerdet.

Die Befestigung des Leiters 5 kann auf unterschiedliche Art und Weise erfolgen, beispielsweise durch Klemmen, Schweißen, Stecken oder Durchbohren des Druckgehäuses und Hindurchstecken des Leiters. Das Druckgehäuse 2 weist, wie sich dies aus Fig. 1 ergibt, ein mittiges Druckgehäuseteil 6 und endseitig jeweils ein Anschlußstück 7, 8 zum Anschluß an die nicht dargestellte Leitung auf. Zwischen dem mittleren Druckgehäuseteil 6 und den beiden Anschlußstücken 7, 8 ist jeweils eine Dichtung 9, 10 vorgesehen.

Im oberen Teil der Fig. 1 einerseits und in dem unteren Teil der Fig. 1 andererseits sind zwei unterschiedliche Möglichkeiten der Befestigung des Drahtes und der Erdung des Druckgehäuses 2 dargestellt. Im oberen Teil der Fig. 1 ist der Leiter 5 am elektrisch leitenden Anschlußstück 8 angeschweißt, wobei das Anschlußstück 8 geerdet ist. Im unteren Teil der Fig. 1 ist der Draht hingegen am mittleren Druckgehäuseteil 6 angeschweißt, wobei das mittlere Druckgehäuseteil 6 geerdet ist. Im übrigen dienen zur Verbindung der Anschlußstücke 7, 8 mit dem mittleren Druckgehäuseteil 6 jeweils Flanschringe 11, die entsprechend zu verschrauben sind, was nicht dargestellt ist.

Wie sich aus Fig. 2 ergibt, ist bei den dort vorgesehenen Keramik-Membranfilterelementen 3, die jeweils eine Mehrzahl von Durchgangsöffnungen 4 aufweisen, jeweils lediglich ein Leiter 5 pro Keramik-Membranfilterelement 3 vorgesehen. Der Leiter 5 ist dabei jeweils durch eine im mittigen Bereich liegende, vorzugsweise durch die zentrale Durchgangsöffnung 4 hindurchgeführt. Zur Befestigung des Leiters 5 am Keramik-Membranfilterelement 3 dient eine endseitige Klebverbindung 3a. Im vorliegenden Fall handelt es sich um einen elektrisch leitfähigen Klebstoff, mit dem der Leiter 5 mit dem Keramik-Membranfilterelement 3 in der betreffenden Durchgangsöffnung 4 verklebt ist. Nicht dargestellt ist, daß der Klebstoff sich im wesentlichen über die gesamte Stirnfläche des Keramik-Membranfilterelements erstreckt. Außerdem reicht der Klebstoff auch über eine geringe Strecke, insbesondere einige Zentimeter, in die Durchgangsöffnungen 4 hinein und zwar auch in solche, in denen sich kein Leiter 5 befindet. Herstellungstechnisch wird einfach dadurch erzielt, daß das betreffende Keramik-Membranfilterelement 3 stirnseitig in den Klebstoff getaucht wird.

Im übrigen ergibt sich aus den Fig. 1 und 2 auch, daß bei Verwendung mehrerer Keramik-Membranfilterelemente 3 in einem Druckgehäuse 2 eine der Anzahl der Keramik-Membranfilterelementen 3 entsprechende Anzahl von Leitern 5 vorgesehen ist, die zu einem Strang zusammengefaßt oder aber mit einem abschließenden weiteren Leiter 5 verbunden werden können, der dann mit dem Druckgehäuse 2 und der Leitung verbunden wird, worüber schließlich die Erdung erfolgt.

Die Funktionsweise der in Fig. 1 dargestellten Filtervorrichtung 1 ist derart, daß über die nicht dargestellte Leitung der Filtervorrichtung 1 zu filtrierende Flüssigkeit zugeführt wird, wie dies durch den Pfeil A dargestellt ist. Die Flüssigkeit strömt durch die Durchgangsöffnungen 4 und wird dabei über die Keramik-Membranfilterelemente 3 filtriert. Das Filtrat wird dann über die Filtratablaufstutzen 12, 13 abgezogen. Es versteht sich, daß hierzu die Filtratablaufstutzen 12, 13 mit entsprechenden, nicht dargestellten Leitungen verbunden sind.

## Patentansprüche

1. Filtervorrichtung (1) für die Mikro- und/oder Ultrafiltration, vorzugsweise für Lacke, wie kathodische Tauchlacke, zum Anschluß an eine Leitung, mit einem Druckgehäuse (2) und wenigstens einem in dem Druckgehäuse (2) angeordneten Keramik-Membranfilterelement (3), wobei das Keramik-Membranfilterelement (3) ein als Multikanal gefertigtes Trägerrohr aufweist, **dadurch gekennzeichnet, daß** das Keramik-Membranfilterelement (3) mit wenigstens einem elektrischen Leiter (5) elektrisch verbunden und über den elektrischen Leiter (5) geerdet ist, daß das Druckgehäuse (2) und/oder die Leitung aus einem elektrisch leitfähigen Material besteht, daß das Keramik-Membranfilterelement (3) über den elektrischen Leiter mit dem Druckgehäuse (2) und/oder der Leitung elektrisch verbunden ist und daß das Druckgehäuse (2) und/oder die Leitung geerdet ist.

2. Filtervorrichtung nach Anspruch 1, **dadurch gekennzeichnet, daß** der Leiter (5) als vom Druckgehäuse (2) separates Bauteil, vorzugsweise als Draht ausgebildet ist, der das Druckgehäuse (2) und/oder die Leitung mit dem Keramik-Membranfilterelement (3) elektrisch verbindet.

3. Filtervorrichtung nach Anspruch 1 oder 2, **dadurch gekennzeichnet, daß** der Leiter (5) in eine Durchgangsbohrung (4) eingeführt ist und daß, vorzugsweise, der Leiter (5) im wesentlichen über die gesamte Länge der Durchgangsbohrung (4) geführt ist.

4. Filtervorrichtung nach einem der vorhergehenden Ansprüche, **dadurch gekennzeichnet, daß** der durch eine Durchgangsbohrung (4) geführte Leiter (5) mit seinen beiden Enden mit dem Druckgehäuse (2) und/oder der Leitung elektrisch verbunden ist.

5. Filtervorrichtung nach einem der vorhergehenden Ansprüche, **dadurch gekennzeichnet, daß** das Druckgehäuse (2) einen mittigen Druckgehäuseteil (6) und endseitig jeweils ein Anschlußstück (7, 8) zum Anschluß an die Leitung aufweist.

6. Filtervorrichtung nach einem der vorhergehenden Ansprüche, **dadurch gekennzeichnet, daß** lediglich ein einziger Leiter für das Keramik-Membranfilterelement (3) vorgesehen ist.

7. Filtervorrichtung nach einem der vorhergehenden Ansprüche, **dadurch gekennzeichnet, daß** der Leiter (5) über einen elektrisch leitfähigen Klebstoff mit dem Keramik-Membranfilterelement (3) in der Durchgangsöffnung verklebt ist, daß, vorzugsweise, der elektrisch leitfähige Klebstoff sich im wesentlichen über die gesamte Stirnfläche des Keramik-Membranfilterelements (3) erstreckt und daß, vorzugsweise, sich der elektrisch leitfähige Klebstoff über eine geringe Strecke bis in die keinen Leiter (5) aufweisenden Durchgangsöffnungen (4) erstreckt.

8. Filtervorrichtung nach einem der vorhergehenden Ansprüche, **dadurch gekennzeichnet, daß** eine Mehrzahl von Keramik-Membranfilterelementen (3) im Druckgehäuse (2) vorgesehen sind und daß jedes Keramik-Membranfilterelement (3) einen Leiter (5) aufweist.

9. Verfahren zur Mikro- und/oder Ultrafiltration von zu filtrierenden Flüssigkeiten unter Verwendung der Filtervorrichtung nach einem der Ansprüche 1 bis 8.

## Claims

1. Filter device (1) for microfiltration and/or ultrafiltration, preferably for coatings, such as cathodic dip coatings, for connection to a duct, having a pressure housing (2) and at least one ceramic membrane filter element (3) which is disposed in the pressure housing (2), the ceramic membrane filter element (3) having a carrier tube which is fabricated to be multichannel, **characterized in that** the ceramic membrane filter element (3) is electrically connected to at least one electrical conductor (5) and is earthed via the electrical conductor (5), **in that** the pressure housing (2) and/or the duct consists of an electrically conducting material, **in that** the ceramic membrane filter element (3) is electrically connected via the electrical conductor to the pressure housing (2) and/or the duct and **in that** the pressure housing (2) and/or the duct is earthed.

2. Filter device according to Claim 1, **characterized in that** the conductor (5) is constructed as a component separate from the pressure housing (2), preferably as wire, which electrically connects the pressure housing (2) and/or the duct to the ceramic membrane filter element (3).

3. Filter device according to Claim 1 or 2, **characterized in that** the conductor (5) is introduced into a through-bore hole (4) and **in that**, preferably, the conductor (5) is passed essentially over the entire length of the through-bore hole (4).

4. Filter device according to one of the preceding claims, **characterized in that** the conductor (5) which is passed through a through-bore hole (4) is electrically connected by its two ends to the pressure housing (2) and/or the duct.

5. Filter device according to one of the preceding claims, **characterized in that** the pressure housing (2) has a central pressure housing part (6) and at the ends in each case a connection piece (7, 8) for connection to the duct.

6. Filter device according to one of the preceding claims, **characterized in that** only a single conductor is provided for the ceramic membrane filter element (3).

7. Filter device according to one of the preceding claims, **characterized in that** the conductor (5) is glued via an electrically conducting adhesive to the ceramic membrane filter element (3) in the through-bore hole, **in that**, preferably, the electrically conducting adhesive extends essentially over the entire end surface of the ceramic membrane filter element (3) and **in that**, preferably, the electrically conducting adhesive extends over a short section up to the through-bore holes (4) having no conductor (5).

8. Filter device according to one of the preceding claims, **characterized in that** a multiplicity of ceramic membrane filter elements (3) are provided in the pressure housing (2) and **in that** each ceramic membrane filter element (3) has a conductor (5).

9. Process for the microfiltration and/or ultrafiltration of liquids to be filtered using the filter device according to one of Claims 1 to 8.

## Revendications

1. Dispositif de filtre (1) pour microfiltration et/ou ultrafiltration, de préférence pour des peintures, par exemple des peintures pour immersion cathodique, destiné à être raccordé à un conduit, et qui présente un boîtier (2) résistant à la pression et au moins un élément (3) de filtre à membrane en céramique disposé dans le boîtier (2) résistant à la pression, l'élément (3) de filtre à membrane en céramique présentant un tube de support fabriqué sous la forme d'un canal multiple, **caractérisé en ce que** l'élément (3) de filtre à membrane en céramique est relié électriquement à au moins un conducteur électrique (5) et est raccordé à la terre par l'intermédiaire du conducteur électrique (5), **en ce que** le boîtier (2) résistant à la pression et/ou le conduit sont constitués d'un matériau électriquement conducteur, **en ce que** l'élément (3) de filtre à membrane en céramique est relié électriquement par le conducteur électrique au boîtier (2) résistant à la pression et/ou au conduit et **en ce que** le boîtier (2) résistant à la pression et/ou le conduit sont raccordés à la terre.

2. Dispositif de filtre selon la revendication 1, **caractérisé en ce que** le conducteur (5) est configuré comme composant séparé du boîtier (2) résistant à la pression et de préférence comme fil qui relie électriquement le boîtier (2) résistant à la pression et/ou le conduit à l'élément (3) de filtre à membrane en céramique.

3. Dispositif de filtre selon les revendications 1 ou 2, **caractérisé en ce que** le conducteur (5) est inséré dans un alésage de passage (4) et **en ce que** le conducteur (5) est guidé de préférence essentiellement sur toute la longueur de l'alésage de passage (4).

4. Dispositif de filtre selon l'une des revendications précédentes, **caractérisé en ce que** le conducteur (5) guidé dans l'alésage de passage (4) est relié électriquement par ses deux extrémités au boîtier (2) résistant à la pression et/ou au conduit.

5. Dispositif de filtre selon l'une des revendications précédentes, **caractérisé en ce que** le boîtier (2) résistant à la pression présente une pièce centrale (6) de boîtier résistant à la pression et à chacune de ses extrémités une pièce de raccordement (7, 8) destinée à raccorder cette pièce centrale au conduit.

6. Dispositif de filtre selon l'une des revendications précédentes, **caractérisé en ce qu'**un seul conducteur est prévu pour l'élément (3) de filtre à membrane en céramique.

7. Dispositif de filtre selon l'une des revendications précédentes, **caractérisé en ce que** dans l'ouverture de passage, le conducteur (5) est collé par un adhésif électriquement conducteur à l'élément (3) de filtre à membrane en céramique, **en ce que** l'adhésif électriquement conducteur s'étend de préférence essentiellement sur toute la surface frontale de l'élément (3) de filtre à membrane en céramique et **en ce que** l'adhésif électriquement conducteur s'étend de préférence sur un petit parcours qui conduit jusque dans les ouvertures de passage (4) qui ne présentent pas le conducteur (5).

8. Dispositif de filtre selon l'une des revendications précédentes, **caractérisé en ce que** plusieurs éléments (3) de filtre à membrane en céramique sont prévus dans le boîtier (2) résistant à la pression et **en ce que** chaque élément (3) de filtre à membrane en céramique présente un conducteur (5).

9. Procédé de microfiltration et/ou d'ultrafiltration de liquides à filtrer, qui recourt à un dispositif de filtre selon l'une des revendications 1 à 8.
